# EUROPÄISCHE PATENTANMELDUNG

(11) **EP 4 760 037 A1**
(43) Veröffentlichungstag der Anmeldung: **17.06.2026**
(21) Anmeldenummer: 25216901.6
(22) Anmeldetag: 19.11.2025
(51) Int. Cl.: E05F 15/603, E05F 15/611, E05F 15/622

(54) **ANTRIEBSEINRICHTUNG**

(30) Priorität: 10.12.2024 DE 102024137011
(71) Anmelder: Stabilus GmbH, 56070 Koblenz (DE)
(72) Erfinder: Keßler, Jonathan, 56070 Koblenz, Germany (DE)

(57) **Zusammenfassung**

Die Erfindung betrifft eine Antriebseinrichtung (10) wenigstens umfassend ein Gehäuse (20) sowie eine teilweise im Gehäuse (20) angeordnete, mit dem Gehäuse verbindbare Antriebsanordnung (12) mit einer an dem Gehäuse (20) drehfest angeordneten Antriebseinheit (14), welche ein Antriebsgehäuse (24) aufweist.

Erfindungsgemäß ist wenigstens ein Verbindungselement (28) zur mittelbaren Verbindung zwischen dem Gehäuse (20) und dem Antriebsgehäuse (24) angeordnet vorgesehen, welches in einem Aufnahmebereich an einer Außenseite des Antriebsgehäuses (24) angeordnet und mit diesem formschlüssig verbunden vorgesehen ist und welches mit dem Gehäuse (20) stoffschlüssig verbunden ist.

Weiter betrifft die die Erfindung ein Fahrzeug (200) mit einer Antriebseinrichtung (10) für ein relativ zu der Karosserie des Fahrzeugs bewegbaren Fahrzeugteils.

## Beschreibung

Die Erfindung betrifft eine Antriebseinrichtung gemäß dem Oberbegriff des Patentanspruchs 1. Weiter betrifft die Erfindung ein Fahrzeug mit einer Antriebseinrichtung.

Derartige Antriebseinrichtungen sind allgemein bekannt und umfassen in der Regel ein Gehäuse sowie eine teilweise im Gehäuse angeordnete Antriebsanordnung mit einer an dem Gehäuse drehfest angeordneten Antriebseinheit. Die Antriebseinheit ist dabei beispielsweise ein Motor, welcher ein Antriebselement rotatorisch antreibt. Die Rotation kann je nach Verwendung der Antriebseinrichtung mittels eines im Gehäuse angeordneten Getriebes in eine Translation umgewandelt werden.

Eine derartige Antriebseinrichtung findet zum Beispiel Anwendung in einem Fahrzeug, wobei die Antriebseinrichtung zur Bewegung bzw. zum Verschwenken eines bewegbaren Tür- oder Klappenelements vorgesehen ist. Eine Antriebseinrichtung der eingangs genannten Art ist beispielsweise aus DE102022130161A1 bekannt. Aufgrund der notwendigen Schwenkbewegung des bewegbaren Tür- oder Klappenelements, welches mittels einer Scharnier- oder Gelenkverbindung an der übergeordneten Baueinheit angelenkt ist, ist es notwendig, dass die Antriebseinrichtung bzw. Teile der Antriebseinrichtung eine daran angepasst Bewegung ausführen können und ein diesbezüglich Bauraum bereitgestellt ist.

Der für die Antriebseinrichtung vorgesehen Bauraum ist jedoch insbesondere durch die Zunahme von weiteren Funktionen und den damit einhergehenden zusätzlichen Bauteilen zunehmend begrenzt. Daher ist es erforderlich, die Bauteile der Antriebseinrichtung derart zueinander anzuordnen, dass diese den Bauraumvorgaben entspricht. Die aus dem Stand der Technik bekannten Antriebseinrichtung weisen deshalb eine Antriebseinheit auf, welche in einer geeigneten Position bezüglich des Gehäuses angeordnet wird. In der Regel wird die Antriebseinheit in einer vorgegebenen Position an das Gehäuse angeschraubt oder alternativ komplett im Gehäuse angeordnet.

Eine formschlüssige Verbindung von Gehäuseteilen ist beispielsweise aus der DE102019112682A1 bekannt. Diese offenbart einen Spindelantrieb mit einem Gehäuserohr, welches bei der Montage zur formschlüssigen Verbindung über einen mit einem Antriebseinheitsgehäuse axialfest verbundenen Abstandshalter geschoben wird.

Vor diesem Hintergrund ist es Aufgabe der Erfindung, eine hinsichtlich der Kosten und des Bauraumes verbesserte Antriebseinrichtung anzugeben. Ferner ist es Aufgabe der Erfindung, ein Fahrzeug mit einer solchen Antriebseinrichtung anzugeben.

Erfindungsgemäß wird diese Aufgabe in Hinblick auf die Antriebseinrichtung durch den Gegenstand des Patentanspruchs 1 und in Hinblick auf das Fahrzeug durch den Gegenstand des Patentanspruchs 13 gelöst.

Konkret wird die Aufgabe durch eine Antriebseinrichtung gelöst, die wenigstens ein Gehäuse sowie eine teilweise im Gehäuse angeordnete Antriebsanordnung mit deiner an dem Gehäuse drehfest angeordneten Antriebseinheit umfasst. Die Antriebseinheit ist wenigstens mittelbar mit dem Gehäuse verbindbar.

Erfindungsgemäß ist wenigstens ein Verbindungselement zur mittelbaren Verbindung zwischen dem Gehäuse und dem Antriebsgehäuse angeordnet vorgesehen. Das wenigstens eine Verbindungselement ist in einem Aufnahmebereich an einer Außenseite des Antriebsgehäuses angeordnet und mit diesem formschlüssig verbunden. Ferner ist das wenigstens eine Verbindungselement mit dem Gehäuse stoffschlüssig verbunden.

Die erfindungsgemäße Verbindung bietet eine besonders vorteilhafte variable Positionierung der beiden Bauteile zueinander und kann damit ohne weiteren Aufwand zum Beispiel an die Einbauvorgaben angepasst werden. Damit kann der Bauraum der Antriebseinrichtung optimiert und die Antriebseinrichtung kann ohne Änderungsaufwand an eine Vielzahl von unterschiedlichen Einbausituationen angepasst werden.

Unter einer mittelbaren Verbindung ist dabei zu verstehen, dass die beiden Bauteile Gehäuse und Antriebseinheit nicht direkt miteinander verbunden sind. Damit entfällt beispielsweise eine Schraubverbindung zwischen Gehäuse und Antriebseinheit, wodurch der Bauraum an der Verbindungsstelle minimiert ist.

Da das Verbindungselement zur mittelbaren Verbindung zwischen dem Gehäuse und dem Antriebsgehäuse der Antriebseinheit angeordnet vorgesehen ist, kann durch diese Positionierung des Verbindungselementes zwischen den beiden zu verbindenden Bauteilen Gehäuse und Antriebseinheit mit geeigneten Verbindungsmethoden eine drehfeste Verbindung ohne die Vergrößerung des Bauraums ermöglicht werden.

Vorzugsweise kann das Verbindungselement in einem Verbindungsbereich des Antriebsgehäuses angeordnet sein und ein Befestigungsbereich des Gehäuses kann den Verbindungsbereich des Antriebsgehäuses derart überlappen, dass eine Vorspannung zwischen dem Verbindungselement und den daran anliegenden Bauteilen vorgesehen ist. Durch die Vorspannung kann die mittelbare Verbindung möglichst spielfrei hergestellt werden. Dabei erfolgt die stoffschlüssige Verbindung des Verbindungselement beispielsweise mit dem Befestigungsbereich des Gehäuses und die formschlüssige Verbindung des Verbindungselements erfolgt mit dem Verbindungsbereich des Antriebsgehäuses.

Vorzugsweise kann das Verbindungselement als Ringelement und der Aufnahmebereich als Nut ausgebildet sein. Die Nut sowie dieie formschlüssige Verbindung sind auf diese Weise besonders einfach herstellbar.

Um eine drehfeste Verbindung zwischen dem Verbindungselement und dem Gehäuse bzw. dem Befestigungsbereich des Gehäuses besonders einfach zu realisieren, kann ein die Nut des Antriebsgehäuses unterbrechender Steg vorgesehen und das Ringelement geschlitzt ausgebildet sein, wobei Ringenden des Ringelements derart von entgegengesetzten Seiten an den Steg anlegbar sind, dass das Ringelement drehfest in der Nut angeordnet ist. Das Ringelement ist also im Wesentlichen C-förmig vorgesehen und beispielsweise aus Kunststoff ausgebildet, wodurch die Montage besonders einfach möglich ist.

Es hat sich gezeigt, dass es insbesondere vorteilhaft ist, wenn das Verbindungselement und das Gehäuse miteinander verschweißt vorgesehen sind. Diese Verbindungstechnik bietet eine sichere und ausreichend feste Verbindung der Bauteile.

Hierbei sind vorzugsweise das Gehäuse und das Verbindungselement aus dem gleichen Kunststoffrohmaterial hergestellt, wobei das Gehäuse lasertransparent und das Verbindungselement laserabsorbierend ausgebildet vorgesehen ist. Neben der sicheren Schweißverbindung zwischen Gehäuse und Verbindungselement hat diese Ausbildung den Vorteil, dass das Gehäuse und das Antriebsgehäuse aus unterschiedlichen, an die Anforderungen angepassten Kunststoffen ausgebildet werden können. Das Antriebsgehäuse inklusive einem daran angeformten Motorstecker muss aufgrund der Abwärme des Motors temperaturbeständig sein und ist beispielsweise aus einem PA66-Kunststoff ausgebildet. Das Gehäuse muss dagegen geometriestabil sein und darf kein Wasser oder keine Feuchtigkeit aufnehmen. Daher sind das Gehäuse und das Verbindungselement beispielsweise aus einem formstabilen PBT/PET-Kunststoff ausgebildet. Mittels des Verbindungselementes ist es damit möglich, Bauteile aus unterschiedlich, nicht miteinander verschweißbaren Materialien zuverlässig zu verbinden.

Eine bezüglich der Festigkeit weiter verbesserte Verbindung zwischen dem Gehäuse und der Antriebseinheit kann beispielsweise dadurch hergestellt werden, dass zur mittelbaren Verbindung mehrere Verbindungselemente vorgesehen sind. Das heißt, es können mehrere Ringelemente in voneinander beabstandete Nuten angeordnet werden.

Zur Abdichtung kann ferner ein Dichtelement zwischen dem Gehäuse und dem Antriebsgehäuse angeordnet sein. Das Dichtelement kann dabei beispielweise als O-Ring ausgebildet und in einem von den beiden Bauteilen Gehäuse und Antriebsgehäuse gebildeten Ringraum angeordnet sein.

Vorzugsweise ist die Antriebseinrichtung als Stellvorrichtung für ein relativ zu einer übergeordneten Baueinheit bewegbares Türelement ausgebildet, wobei das Gehäuse am beweglichen Türelement angeordnet und ein Stellelement vorgesehen ist, welches mittels der Antriebseinheit entlang einer Verlagerungsachse relativ zur Antriebsanordnung verlagerbar und mit einem freien Ende zum Anordnen an der übergeordneten Baueinheit gelenkig verbindbar ausgebildet ist.

Dabei kann das Türelement ein relativ zu einer Karosserie eines Fahrzeugs bewegbares Tür- oder Klappenelement sein. Beispielsweise ist das Türelement eine Fahrzeug-Seitentür. Es ist jedoch ausdrücklich zu erwähnen, dass das Türelement ebenfalls eine Heck- oder Frontklappe oder eine Gepäckraumklappe sein kann. Ferner ist die Anwendung der Antriebseinrichtung nicht auf ein Fahrzeug beschränkt. Die übergeordnete Baueinheit kann ein Kraft- oder Landfahrzeug oder eine Maschine mit einem bewegbaren Türelement sein. Grundsätzlich ist ebenso eine Anwendung für Gebäuden- oder Möbeltüren denkbar.

Bevorzugterweise ist die Stellvorrichtung als elektrischer Spindelantrieb ausgebildet.

Dabei kann die Stellvorrichtung eine Schlittenanordnung aufweisen, welche mittels einer Antriebseinheit entlang einer Rotationsachse einer Spindel zwischen einer ersten Position und einer zweiten Position überführbar ist, wobei das Stellelement an einem Ende mit der Schlittenanordnung verbunden ist. Weiter kann die Schlittenanordnung eine Spindelmutter umfassen, welche mit der rotierbaren Spindel in Gewindeeingriff steht.

Eine alternative Ausführungsform der Erfindung sieht vor, dass eine Spindel des Spindelantriebs selbst längsverschieblich ausgebildet ist und das Stellelement bildet. Bei dieser Ausführung ist eine mit der Spindel in Gewindeeingriff stehende Spindelmutter rotierbar ausgebildet vorgesehen.

Ein nebengeordneter Aspekt der Erfindung betrifft ein Fahrzeug mit einer zuvor beschriebenen Antriebseinrichtung.

Die vorliegende Erfindung wird im Folgenden anhand eines Ausführungsbeispiels beschrieben werden. Es stellen dar:
- Figur 1: einen Längsschnitt einer bekannten Antriebseinrichtung;
- Figur 2: eine räumliche Darstellung einer Antriebsanordnung einer erfindungsgemäßen Antriebseinrichtung mit befestigtem Gehäuse;
- Figur 3: die Antriebsanordnung gemäß Figur 2 mit transparent dargestelltem Gehäuse;
- Figur 4: die Antriebsanordnung gemäß Figur 2 und 3 ohne Gehäuse und Verbindungselement;
- Figur 5: die Antriebsanordnung gemäß Figur 4 mit montiertem Verbindungselement;
- Figur 6: die Antriebsanordnung gemäß Figur 2 im Längsschnitt;
- Figur 7: eine räumliche Darstellung des Verbindungselements und
- Figur 8: einen vergrößerten Ausschnitt X des Längsschnittes gemäß Figur 6.

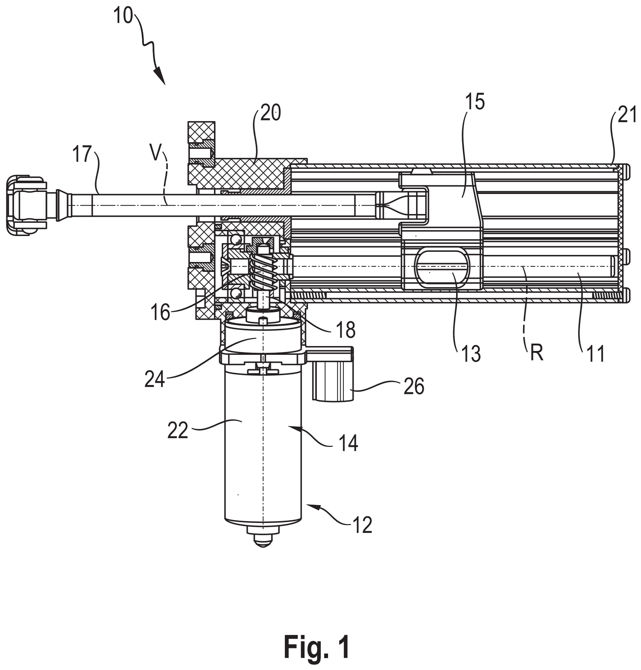

In Figur 1 ist eine bekannte Antriebseinrichtung 10 im Längsschnitt dargestellt. Diese ist als Stellvorrichtung für ein bewegbares Türelement ausgebildet. Die Stellvorrichtung 10 ist beispielhaft als elektrischer Spindelantrieb ausgebildet. Eine derartige Stellvorrichtung ist in der eingangs genannten älteren Anmeldung der Anmelderin DE102022130161A1 offenbart, welche voll umfänglich in den Offenbarungsgehalt der vorliegenden Anmeldung einbezogen wird.

Sie umfasst eine Antriebsanordnung 12 mit einer Antriebseinheit 14 und einem durch die Antriebseinheit 14 angetriebenen Antriebselement 16, welches beispielsweise als eine Schnecke ausgeführt sein kann, die durch die als Elektromotor ausgeführte Antriebseinheit 14 rotatorisch angetrieben wird, und mit einem nicht dargestellten Schneckenrad kämmt. Das Antriebselement 16 und das Schneckenrad bilden dabei eine Getriebeeinheit.

Das Schneckenrad ist auf einer Spindel 11 fest angeordnet, sodass eine Rotation des Antriebselements 16 eine Rotation des Schneckenrads und damit der Spindel 11 hervorruft. Das Antriebselement 16 kann einteilig mit einer Motorwelle 18 der Antriebseinheit 14 ausgebildet oder alternativ mit dieser verbunden sein.

Die Spindel 11 steht mit einer Spindelmutter 13 in Gewindeeingriff, wobei die Spindelmutter 13 rotatorisch relativ zu einem mit einem Gehäuse 20 verbundenen Profilgehäuse 21 der Stellvorrichtung 10 gesichert angeordnet ist und somit auf eine Rotation der Spindel 11 hin axial entlang einer Rotationsachse R der Spindel 11 verlagerbar ist.

Die Spindelmutter 13 ist vorzugsweise Teil einer Schlittenanordnung 15, welche zusammen mit der Spindelmutter 13 entlang der Rotationsachse R der Spindel 11, auf eine Drehung der Spindel 11 hin, verlagerbar ist. Die Schlittenanordnung 15 ist mit einem Stellelement 17 verbunden, welches als ein s-förmiges Türfangband ausgebildet sein kann. Alternativ könnte das Stellelement 17 auch gerade ausgebildet sein.

Das Stellelement 17 ist an einem freien Ende mit einem bewegbaren Türelement, wie beispielswiese der Seitentür eines Fahrzeugs (nicht dargestellt), oder alternativ mit einer übergeordneten Baueinheit, z.B. eine nicht dargestellte Fahrzeugkarosserie, gelenkig verbunden. Ebenso kann das Türelement eine Heck- oder Frontklappe oder eine Gepäckraumklappe sein. Die übergeordnete Baueinheit kann auch ein Kraft- oder Landfahrzeug oder eine Maschine mit einem bewegbaren Türelement sein. Grundsätzlich ist ebenso eine fahrzeugferne Anwendung für Gebäuden- oder Möbeltüren denkbar.

Auf eine Aktivierung der Antriebseinheit 14 hin wird die Spindel 11 in Rotation versetzt, wodurch über die Schlittenanordnung 15 das Stellelement 17 entlang einer Verlagerungsachse V verlagert wird, so dass das Türelement wenigstens zwischen einer Öffnungs- und einer Schließstellung bewegt werden kann.

Die Antriebseinheit 14 ist als Elektromotor ausgebildet und weist ein Motorgehäuse 22 auf, welches an einem Antriebsgehäuse 24 befestigt ist. Das Antriebsgehäuse 24 wird als Motor-Frontcap bezeichnet und weist einen daran angeformten Motorstecker 26 auf. Die Antriebseinheit 14 ist mittels des Antriebsgehäuses 24 mit dem die Getriebeeinheit wenigstens teilweise aufnehmenden Gehäuse 20 drehfest verbunden.

Das Gehäuse 20 sowie das Antriebsgehäuse 24 sind jeweils aus Kunststoff ausgebildet.

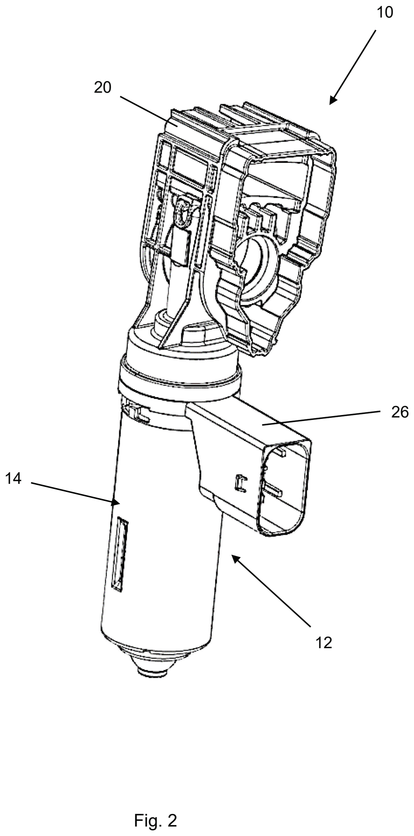

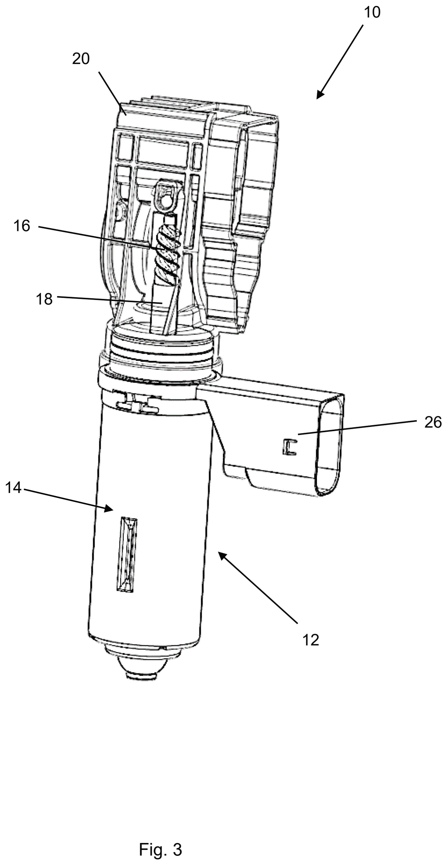

Ein erfindungsgemäßes Ausführungsbeispiel einer Antriebseinrichtung 10 ist den nachfolgend beschriebenen Figuren 2 bis 8 zu entnehmen. Die erfindungsgemäße Antriebseinrichtung 10 kann dabei grundsätzlich gemäß der in Figur 1 gezeigten, bekannten Stellvorrichtung aufgebaut sein. Daher sind gleiche oder ähnliche Bauteile mit den gleichen Bezugszeichen versehen und es wird im Nachfolgenden lediglich auf die erfindungsgemäßen Unterschiede eingegangen. Die Erfindung ist jedoch nicht auf eine gemäß Figur 1 beschriebenen Antriebseinrichtung 10 beschränkt.

Wie nachfolgend beschrieben ist, ist die Antriebseinheit 14 bzw. deren Antriebsgehäuse 24 wenigstens mittelbar mit dem Gehäuse 20 verbindbar. Mittelbar bedeutet, dass die beiden Bauteile Gehäuse 20 und Antriebseinheit 14 nicht direkt miteinander verbunden sind.

Durch die mittelbare Verbindung ist die Positionierung der beiden Bauteile 20, 24 zueinander weitgehend variabel und kann ohne einen größeren Aufwand und insbesondere ohne Kosten an unterschiedliche Einbauvorgaben angepasst werden. Die variable Positionierung ist insbesondere für die Ausrichtung des Motorsteckers 26 vorteilhaft und der Bauraum der Stellvorrichtung 10 kann optimiert werden.

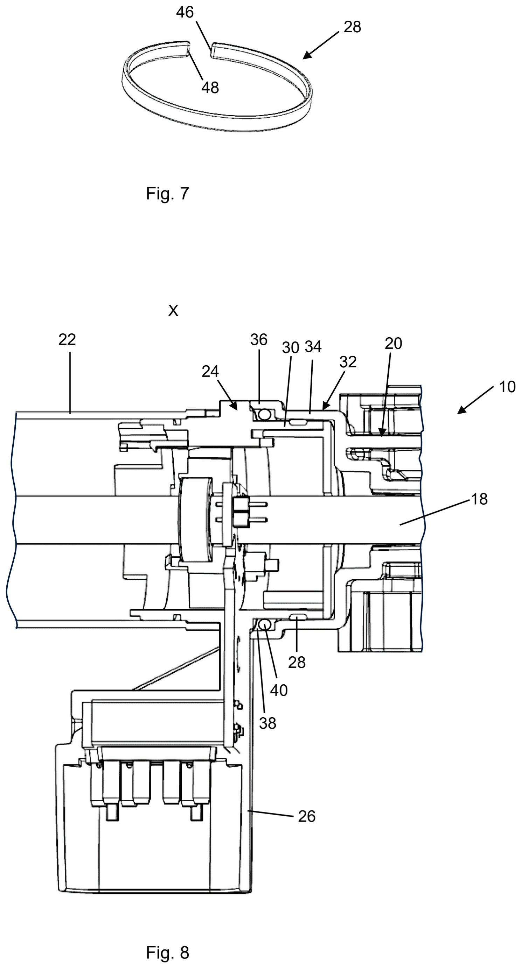

Zur mittelbaren Verbindung ist zwischen dem Gehäuse 20 und dem Antriebsgehäuse 24 der Antriebseinheit 14 ist ein in Figur 7 dargestelltes Verbindungselement 28 vorgesehen, welches vorzugsweise als geschlitztes Ringelement ausgebildet ist. Das Verbindungselement 28 ist damit im Wesentlichen C-förmig ausgebildet und weist zwei einander zugewandte Ringenden 46, 48 auf.

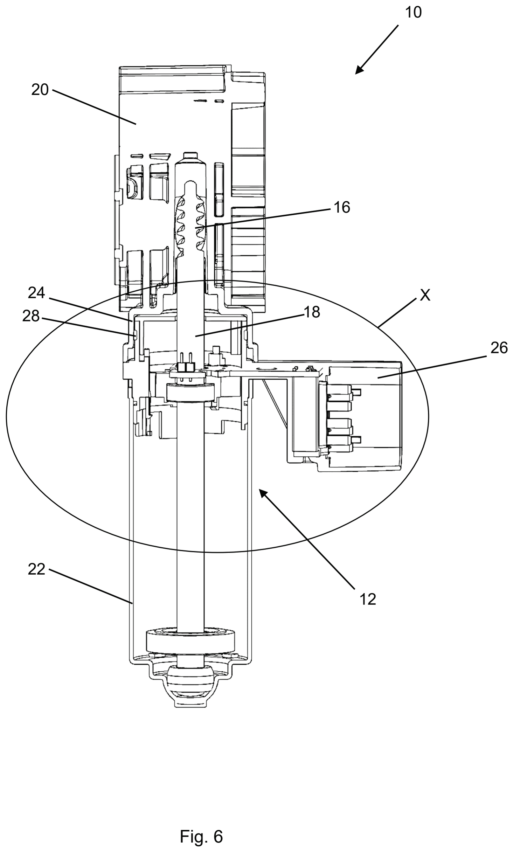

Wie aus Figur 8 hervorgeht, welche einen vergrößerten Ausschnitt X des Längsschnittes gemäß Figur 6 zeigt, ist das Verbindungselement 28 nach der Montage aller Bauteile zwischen dem Antriebsgehäuse 24 und dem Gehäuse 20 angeordnet. Konkret ist die Verbindung in einem Verbindungsbereich 30 des Antriebsgehäuses 24 und einem Befestigungsbereich 32 des Gehäuses 20 realisiert, wobei der Befestigungsbereich 32 den Verbindungsbereich 30 überlappend ausgebildet ist. Dabei ist der Befestigungsbereich 32 im Wesentlichen kragenförmig ausgebildet und weist zwei Kragenbereiche 34, 36 mit unterschiedlichen Durchmessern auf. Ein erster Kragenbereich 34 überlappt den Verbindungsbereich 30 des Antriebsgehäuses 24 insbesondere derart, dass eine Vorspannung zwischen dem Verbindungselement 28 und den daran anliegenden Bauteilen (Verbindungsbereich 30 und Kragenbereich 34) vorgesehen ist.

Ein zweiter Kragenbereich 36, der endseitig am Befestigungsbereich 32 angeordnet ist, weist einen größeren Durchmesser auf und bildet so mit dem Verbindungsbereich 30 einen Ringraum 38, in dem ein Dichtelement 40 angeordnet werden kann. Das Dichtelement 40 - vorzugsweise ein O-Ring - dichtet die Verbindung zwischen Gehäuse 20 und Antriebsgehäuse 24 zuverlässig ab.

Durch die Positionierung des Verbindungselementes 28 zwischen den beiden zu verbindenden Bauteilen Gehäuse 20 und Antriebseinheit 14 kann mit geeigneten Verbindungsmethoden damit eine drehfeste Verbindung ohne die Vergrößerung des Bauraums ermöglicht werden.

Konkret ist das Verbindungselement 28 mit dem Gehäuse 20 stoffschlüssig und mit der Antriebseinheit 14 formschlüssig verbunden vorgesehen. Die stoffschlüssige Verbindung erfolgt mit dem Befestigungsbereich 32 des Gehäuses 20 und die formschlüssige Verbindung erfolgt mit dem ersten Kragenbereich 34 des Befestigungsbereichs 32.

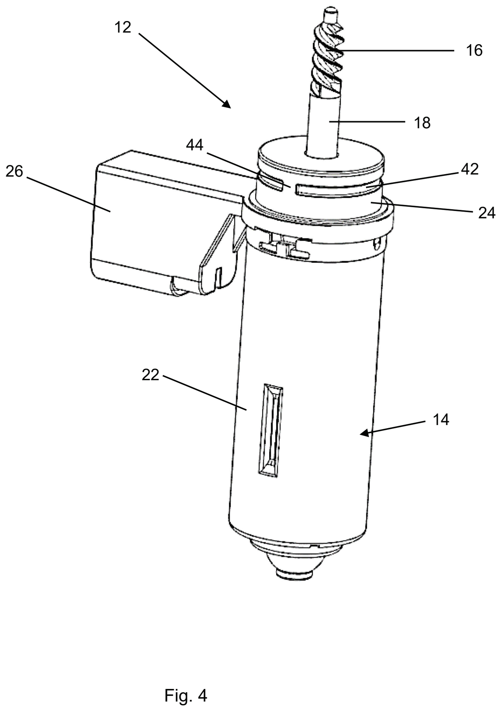

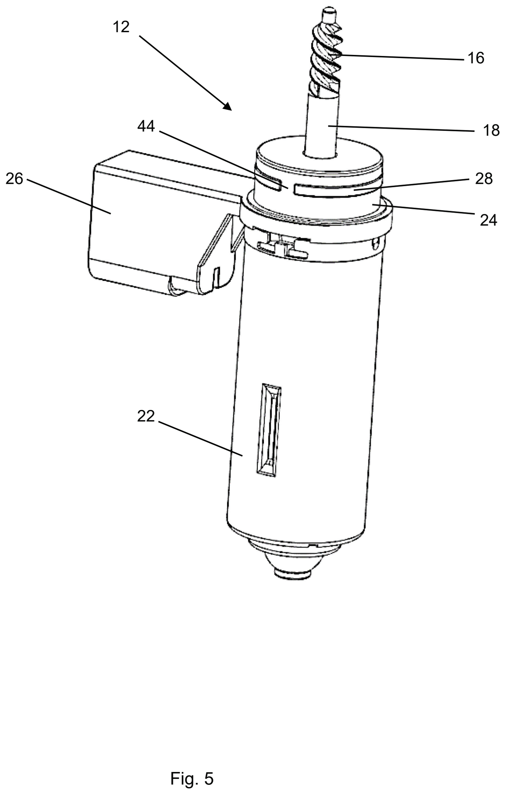

Um die formschlüssige Verbindung mit dem Verbindungsbereich 30 des Antriebsgehäuses 24 in einfacher Weise zu realisieren, weist das Antriebsgehäuse 24 an einer Außenseite einen in Figur 4 gezeigten Aufnahmebereich auf, welcher vorzugsweise als Nut 42 ausgebildet ist, in welcher das ringförmige Verbindungselement 28 montiert werden kann. Ein die Nut 42 unterbrechender Steg 44 ermöglicht dabei die Anlage der Ringenden 46, 48 des Verbindungselementes 28, so dass eine drehfeste Verbindung, Drehmoment übertragende Verbindung entsteht. Figur 4 zeigt die Antriebsanordnung 12 ohne Gehäuse 20 und ohne Verbindungselement 28. Dagegen zeigt Figur 5 die Antriebsanordnung 12 ohne Gehäuse 20 mit dem in die Nut 42 eingelegten Verbindungselement 28.

Die stoffschlüssige Verbindung zwischen dem Befestigungsbereich 32 und dem Verbindungselement 28 erfolgt nach der Montage des Gehäuses 20 mittels eines Laserschweißverfahrens. Hierbei sind das Gehäuse 20 und das Verbindungselement 28 aus dem gleichen Kunststoffrohmaterial ausgebildet, wobei das Gehäuse 20 lasertransparent und das Verbindungselement 28 laserabsorbierend ausgebildet vorgesehen ist. Als Kunststoffrohmaterial für das Gehäuse 20 und das Verbindungselement 28 kommt beispielsweise ein PBT/PET-Kunststoff in Frage, da dieser Formstabilität gewährleistet. Durch einen geeigneten Farbstoff (z.B. Ruß) kann dieser laser-absorbierend ausgebildet werden.

Das Antriebsgehäuse 24 inklusive dem daran angeformten Motorstecker 26 muss aufgrund der Abwärme des Motors temperaturbeständig sein und ist deshalb aus einem anderen Kunststoffrohmaterial (z.B. PA66) ausgebildet.

Mittels des Verbindungselementes 28 ist es damit möglich, Bauteile aus unterschiedlichen, nicht miteinander verschweißbaren Kunststoffen zuverlässig zu verbinden.

Die vorgespannte Anlage des Befestigungsbereichs 32 am Verbindungselement 28 erleichtert dabei die verbesserte Wärmeübertragung während des Schweißvorganges und stellt eine möglichst spielfreie Verbindung sicher.

Die Stellvorrichtung 10 als elektrischer Spindelantrieb mit einem zusätzlichem Stellelement 17 beschrieben, bei welchem eine Rotation der Spindel 11 in eine Translation der Spindelmutter 15 und dem daran angelenkten Stellelement 17 umgewandelt wird. Bei einer alternativen, nicht gezeigten Ausführungsform eines elektrischen Spindelantriebs rotiert eine Spindelmutter und verschiebt die Spindel als Stellelement entlang einer Verstellachse.

Die Erfindung ist nicht auf die beschriebenen Ausführungsformen beschränkt und kann ebenso bei anderen Antriebseinrichtungen/Stellvorrichtungen Anwendung finden.

## Patentansprüche

1. Antriebseinrichtung (10) wenigstens umfassend ein Gehäuse (20) sowie eine teilweise im Gehäuse (20) angeordnete, mit dem Gehäuse verbindbare Antriebsanordnung (12) mit einer an dem Gehäuse (20) drehfest angeordneten Antriebseinheit (14), welche ein Antriebsgehäuse (24) aufweist, **dadurch gekennzeichnet, dass** wenigstens ein Verbindungselement (28) zur mittelbaren Verbindung zwischen dem Gehäuse (20) und dem Antriebsgehäuse (24) angeordnet vorgesehen ist, welches in einem Aufnahmebereich an einer Außenseite des Antriebsgehäuses (24) angeordnet und mit diesem formschlüssig verbunden vorgesehen ist und welches mit dem Gehäuse (20) stoffschlüssig verbunden ist.

2. Antriebseinrichtung (10) nach Anspruch 1, **dadurch gekennzeichnet, dass** das Verbindungselement (28) in einem Verbindungsbereich (30) des Antriebsgehäuses (24) angeordnet ist und ein Befestigungsbereich (32) des Gehäuses (20) den Verbindungsbereich (30) des Antriebsgehäuses (24) derart überlappt, dass eine Vorspannung zwischen dem Verbindungselement (28) und den daran anliegenden Bauteilen (20, 24) vorgesehen ist.

3. Antriebseinrichtung (10) nach Anspruch 1 oder 2, **dadurch gekennzeichnet, dass** das Verbindungselement (28) als Ringelement und der Aufnahmebereich als Nut (42) ausgebildet ist.

4. Antriebseinrichtung (10) nach Anspruch 3, **dadurch gekennzeichnet, dass** ein die Nut (42) des Antriebsgehäuses (24) unterbrechender Steg (44) vorgesehen und das Ringelement (28) geschlitzt ausgebildet ist, wobei Ringenden (46, 48) des Ringelements (28) derart von entgegengesetzten Seiten an den Steg (44) anlegbar sind, dass das Ringelement (28) drehfest in der Nut (44) angeordnet ist.

5. Antriebseinrichtung (10) nach einem der vorstehenden Ansprüche 1 bis 4, **dadurch gekennzeichnet, dass** das Verbindungselement (28) und das Gehäuse (20) miteinander verschweißt vorgesehen sind.

6. Antriebseinrichtung (10) nach Anspruch 5, **dadurch gekennzeichnet, dass** das Gehäuse (20) und das Verbindungselement (28) aus dem gleichen Kunststoffrohmaterial hergestellt sind, wobei das Gehäuse (20) lasertransparent und das Verbindungselement (28) laserabsorbierend ausgebildet vorgesehen ist.

7. Antriebseinrichtung (10) nach einem der vorhergegangenen Ansprüche 1 bis 6, **dadurch gekennzeichnet, dass** zur mittelbaren Verbindung mehrere Verbindungselemente (28) vorgesehen sind.

8. Antriebseinrichtung (10) nach einem der vorhergegangenen Ansprüche 1 bis 7, **dadurch gekennzeichnet, dass** zur Abdichtung ein Dichtelement (40) zwischen dem Gehäuse (20) und dem Antriebsgehäuse (24) angeordnet ist.

9. Antriebseinrichtung (10) nach einem der vorhergegangenen Ansprüche, **dadurch gekennzeichnet, dass** die Antriebseinrichtung (10) als Stellvorrichtung für ein relativ zu einer übergeordneten Baueinheit bewegbares Türelement ausgebildet ist, wobei das Gehäuse (20) am beweglichen Türelement angeordnet und ein Stellelement (17) vorgesehen ist, welches mittels der Antriebseinheit (14) entlang einer Verlagerungsachse (V) relativ zur Antriebsanordnung (12) verlagerbar und mit einem freien Ende zum Anordnen an der übergeordneten Baueinheit gelenkig verbindbar ausgebildet ist.

10. Antriebseinrichtung (10) nach Anspruch 9, **dadurch gekennzeichnet, dass** das Türelement ein relativ zu einer Karosserie eines Fahrzeugs bewegbares Tür- oder Klappenelement ist.

11. Antriebseinrichtung (10) nach einem der vorhergegangenen Ansprüche 9 oder 10, **dadurch gekennzeichnet, dass** die Stellvorrichtung als elektrischer Spindelantrieb ausgebildet ist und einen Elektromotor als Antriebseinheit (14) aufweist.

12. Antriebseinrichtung (10) nach Anspruch 11, **dadurch gekennzeichnet, dass** eine Schlittenanordnung (15) vorgesehen ist, welche mittels der Antriebseinheit (14) entlang einer Rotationsachse einer Spindel (11) zwischen einer ersten Position und einer zweiten Position überführbar ist, wobei das Stellelement (18) an einem Ende mit der Schlittenanordnung (15) verbunden ist.

13. Fahrzeug (200) mit einer Antriebseinrichtung (10) für ein relativ zu der Karosserie des Fahrzeugs bewegbaren Fahrzeugteils, insbesondere eine Fahrzeugtür oder eine Fahrzeugklappe, nach einem der vorhergegangenen Ansprüche 1 bis 12.
